# EUROPEAN PATENT APPLICATION

(11) **EP 4 336 435 A1**
(43) Date of publication of application: **13.03.2024**
(21) Application number: 23193101.5
(22) Date of filing: 24.08.2023
(51) Int. Cl.: G06Q 30/02, G06Q 20/06, G06Q 20/12, G06Q 30/0601, H04L 9/00

(54) **SYSTEMS AND METHODS USING DIGITAL ASSETS**

(30) Priority: 06.09.2022 US 202217903490
(71) Applicant: PUMA SE, 91074 Herzogenaurach (DE)
(72) Inventor: DASHKOV, Ivan, Boston, 02128 (US)
(74) Representative: Gosdin, Carstensen & Partner Patentanwälte Partnerschaftgesellschaft mbB

(57) **Abstract**

A method of using a non-fungible token includes the steps of generating a first digital asset with a virtual object and minting a first non-fungible token to secure ownership of the first digital asset to a blockchain. The method further includes the steps of providing the first digital asset on a digital platform and transferring the first non-fungible token to a user wallet. The method also includes the steps of generating a second digital asset and a third digital asset, initiating a first redemption sequence upon occurrence of a first redemption event, and burning the first digital asset.

## Description

### BACKGROUND

Market participants and brand enthusiasts in a free market typically assign a higher value to an object if there is a limited supply and/or if there is excess demand for that object. While these realities have been realized in the physical, real world, similar market realities also exist within the digital, virtual realm.

There exists a continuing need for improvement in providing access to virtual and physical items.

### SUMMARY

In accordance with some embodiments of the disclosed subject matter, systems, methods, and media for using digital assets to access virtual and/or physical items are provided.

In some aspects, a method of using a non-fungible token comprises the steps of generating a first digital asset including a first virtual object, minting a first non-fungible token securing ownership of the first digital asset to a blockchain, providing the first digital asset on a digital platform, and transferring the first non-fungible token to a user wallet. The method further comprises the steps of generating a second digital asset including a second virtual object, minting a second non-fungible token securing ownership of the second digital asset to the blockchain, generating a third digital asset including a third virtual object, minting a third non-fungible token securing ownership of the third digital asset to a blockchain, and initiating a first redemption sequence upon occurrence of a first redemption event. The first redemption sequence comprises burning the first digital asset and transferring the second non-fungible token and the third non-fungible token to the user wallet. Further, the method comprises initiating a second redemption sequence upon occurrence of a second redemption event. The second redemption sequence comprises at least one of burning the third digital asset and producing a physical item corresponding to the second virtual object of the second digital asset.

In some embodiments, each of the first redemption event and the second redemption event include at least one of a transaction or a predetermined window of time. In some embodiments, the second redemption sequence must occur after the first redemption event. In some embodiments, the second redemption event and the first redemption event occur at different times. In some embodiments, the second redemption event is expiration of a predetermined window of time that, upon occurrence, is configured to initiate only burning the third digital asset. In some embodiments, the second redemption event is a transaction that, upon occurrence before a claim date, is configured to initiate burning the third digital asset and producing the physical item corresponding to the second virtual object of the second digital asset. In some embodiments, a first metadata element of the first digital asset is a uniform resource locator and a second metadata element of a second digital asset is a product identifier. In some embodiments, the first virtual object is a digital artwork, and the first digital asset comprises a plurality of digital assets having the digital artwork.

In some embodiments, the second virtual object is a digital representation of an article of footwear, and the second digital asset comprises a plurality of digital assets having the digital representation of the article of footwear. In some embodiments, the second digital asset comprises a plurality of digital assets each having a digital representation of an article of footwear that is different from one another. In some embodiments, a first metadata element, a second metadata element, and a third metadata element each include a URL to a site hosted remotely, off of the blockchain.

In some aspects, a method of using a non-fungible token comprises the steps of generating a first digital asset including a first virtual object, minting a first non-fungible token securing ownership of the first digital asset to a blockchain, providing the first digital asset on a digital platform, and transferring the first non-fungible token to a user wallet. The method further comprises the steps of generating a second digital asset including a second virtual object, minting a second non-fungible token securing ownership of the second digital asset to the blockchain, generating a third digital asset including a third virtual object, minting a third non-fungible token securing ownership of the third digital asset to a blockchain, and initiating a first redemption sequence upon occurrence of a first redemption event. The first redemption sequence comprises burning the first digital asset and transferring the second non-fungible token and the third non-fungible token to the user wallet. Further, the method comprises the steps of updating the second virtual object of the second digital asset based on a fourth digital asset secured with a fourth non-fungible token and initiating a second redemption sequence upon occurrence of a second redemption event. The second redemption sequence comprises at least one of burning the third digital asset and producing a physical item corresponding to the second virtual object of the second digital asset.

In some embodiments, a first metadata element, a second metadata element, and a third metadata element each include a URL to a site hosted remotely, off of the blockchain. In some embodiments, a first metadata element of the first digital asset is updated automatically by the digital platform to burn the first digital asset. In some embodiments, the second virtual object of the second digital asset is updated only after approval is provided by a user. In some embodiments, the second redemption event is a transaction that, upon occurrence before a claim date, is configured to initiate burning the third digital asset and producing the physical item corresponding to the second virtual object of the second digital asset. In some embodiments, the method further comprises displaying the second virtual object as a profile picture associated with a user account on the digital platform.

In some embodiments, the first digital asset and the third digital asset are configured to be non-transferrable by a user. In some embodiments, the second digital asset is configured to be transferrable by a user. In some embodiments, a second metadata element of the second digital asset is a product identifier.

### BRIEF DESCRIPTION OF THE DRAWINGS

Various objects, features, and advantages of the disclosed subject matter can be more fully appreciated with reference to the following detailed description of the disclosed subject matter when considered in connection with the following drawings, in which like reference numerals identify like elements.
FIG. 1 depicts an example of a system for generating a non-fungible token in accordance with some embodiments of the disclosed subject matter;
FIG. 2 depicts an example of hardware that can be used to implement a computing device and a server, shown in FIG. 1, in accordance with some embodiments of the disclosed subject matter;
FIG. 3 depicts a schematic representation of an example blockchain network according to some embodiments of the present disclosure;
FIG. 4 depicts another schematic representation of an example blockchain network according to some embodiments of the present disclosure;
FIG. 5 depicts a flowchart for an example method of generating a digital asset protected by a non-fungible token according to some embodiments of the present disclosure;
FIGS. 6A and 6B depict a flowchart for an example method of using a digital asset and non-fungible token; and
FIG. 7 depicts another flow chart for an example method of using a digital asset and non-fungible token.

### DETAILED DESCRIPTION

The present application includes embodiments of mechanisms (*e.g.,* systems, methods, and media) for generating digital assets secured by cryptographic tokens, *e.g.,* non-fungible tokens (NFTs), and which may correspond to physical objects (*e.g.,* articles of apparel, or articles of footwear). In some embodiments, this disclosure relates to cryptographic digital assets for articles or objects, such as, e.g., tangible objects, including footwear, apparel, headgear, golf clubs, golf bags, or sporting gear, among other products, such as, *e.g.,* watches, luggage, jewelry, storage or shipping containers, artwork, mobile phones or smartphones, tablets, televisions or other electronic devices, refrigerators or other appliances, and vehicles or other machines, or the articles or objects may be intangible objects, including graphic designs, virtual avatars or characters, graphic user interfaces, or other forms of communication.

Further, this disclosure relates to cryptographic digital assets associated with physical objects, and methods for provisioning of such cryptographic digital assets and articles, and decentralized computing systems with attendant blockchain control logic for mining, exchanging, collaborating, modifying, combining, and/or blending blockchain-enabled digital assets and articles. The presently described technology relies on the trust established in and by blockchain technology to enable a company to control the creation, distribution, expression, and use of digital objects that represent their brand. Unlike typical digital assets that are freely reproducible without loss of content or quality, the use of discrete recordation of ownership via blockchain technology eliminates the ability for simple digital reproductions of the digital objects. In doing so, the manufacturer has the ability to control or limit the overall supply of the digital objects or traits/aspects thereof and may create a controlled scarcity if so desired. The present disclosure contemplates that, in some examples, the digital object may be representative of: a ticket for admittance to an event, a proof of attendance at an event, a physical object offered for sale; a 2D or 3D design rendering or design file that may be suitable for future production; a virtual representation of an object that is not presently intended for physical creation/production; or other such objects. Further, some embodiments of the present disclosure include mechanisms for generating cryptographic tokens using virtual reality (VR), augmented reality (AR), and/or graphical user interfaces (GUIs) on computing devices.

The present application further discloses mechanisms that bridge the divide between the physical world and the digital realm. For example, according to some embodiments of the present disclosure, individuals customize a digital product, mint an NFT of the digital product, and receive a physical product corresponding to both the digital product and the NFT. In some examples, individuals purchase a physical product, receive a digital product corresponding with the physical product, and an NFT is minted of the digital product. As another example, users may purchase an NFT in connection with virtual or non-virtual attendance of an event, and the metadata of the NFT may be updated based on data collected throughout the event. In such examples, users may attend a promotional event, and may receive an NFT that is minted with metadata based on their behavior, e.g., attendance and/or activities, occurring during the event. In another example, users can purchase an NFT that can be updated based on transactions of the user with the manufacturer or retailer, and can entitle the user to certain benefits and entitlements based on the transactions. In such examples, the NFT may be updated with data associated with transactions involving the purchase of another NFT or digital asset, or physical items such as, *e.g.,* apparel, footwear, or transactions involving the purchase of tickets or passes.

In some embodiments, NFTs can secure, authenticate, or verify ownership of digital assets having different properties and different functions. A uniform resource identifier (URI) of an NFT can be a uniform resource locator (URL) pointing to a digital asset and/or metadata associated with a digital asset that is hosted on a server of a host system. The metadata of a digital asset can further include another URL where the digital asset is hosted. For example, accessing a URI of a NFT representing a physical or digital article of footwear can include accessing the URI in a browser and visually inspecting the attributes, which may be presented in a code-readable format (*e.g.,* JSON, XML, HTML, etc.). A URI of a digital asset representing an article of footwear may return a list of attributes or designs which could be utilized by third party platforms (*e.g.,* video game systems or digital marketplaces) to provide the owner of the digital asset some functionality or benefit. Other examples of NFTs could additionally or alternatively authenticate ownership of a digital asset including an image or design. For example, an NFT could authenticate ownership of a design that could be represented as an image hosted at the URI of the NFT, or in a URL of the metadata hosed at the URI. Ownership of both an NFT of an article of footwear and of an NFT for a design could entitle the owner to benefits, such as, e.g., applying the design to a digital article of footwear in a video game or a metaverse, or could entitle the user to purchase a physical article of footwear having the design of the NFT.

In some embodiments, an NFT can function as a digital identity for an owner, and can provide access to digital markets, gateways, portals, APIs, games, or web pages which the owner would not otherwise be able to access. For example, an NFT can entitle the owner to access a webpage for a vendor that could provide the owner with the access to exclusive benefits. In some embodiments, the benefits offered could be based on the type and metadata of an NFT. For example, an NFT could represent a digital article of footwear, and ownership of an NFT could entitle an owner to purchase an article of footwear having the same description as the digital article of footwear, or could entitle an owner to trade the NFT for a physical article of footwear, or could provide the user with a discount on a physical article of footwear having the same properties of the digital article of footwear.

By way of example, and not limitation, there are presented cryptographic digital assets that are provisioned through a blockchain ledger of transaction blocks and function, in part, to connect a real-world product, such as a physical article of footwear, to a virtual collectable, such as a digital article of footwear. As used herein, the term "user" is inclusive of a consumer, a purchaser, and a registered member of an online platform. When a consumer buys a genuine article of footwear, a digital representation of an article of footwear may be generated, linked with the consumer, and assigned a cryptographic token, where the digital article of footwear and cryptographic token collectively represent a shoe NFT. The digital representation may include a computer-generated avatar of footwear or a limited-edition artist rendition of the footwear. The digital asset may be secured by an encryption-protected block that contains a hash pointer as a link to a related block in a decentralized blockchain, a transaction timestamp, and transaction data. Using the digital asset, the buyer is enabled to securely trade or sell the tangible footwear, trade or sell the digital footwear, store the non-fungible token representing ownership of the digital footwear in a cryptocurrency wallet or other digital blockchain wallet, and, based on rules of acceptable footwear manufacturability, create a custom, made-as-new, tangible footwear.

Further, users can develop a personal user account that is registered with the original manufacturer of the tangible footwear, *e.g.,* a PUMA Fam account, which is linked to the user's cryptographic wallet and allows the user access to a platform for viewing, purchasing, selling, trading, minting, and burning digital assets and associated cryptographic tokens that may or may not be linked to or representative of tangible goods. The user may purchase an NFT that permits access to a limited number of slots for the additive manufacture of a customized footwear, or any other articles or objects described above.

As used herein, "cryptographic digital assets," or simply "digital assets" may refer to any computer-generated virtual object, including digital footwear, apparel, headgear, sporting equipment, avatars, art, collectables, tickets, coins, creatures, or sub-elements thereof, etc., among other virtual objects, that have a unique, non-fungible tokenized code ("token") registered on and validated by a blockchain platform or otherwise registered in an immutable database. Further, the digital asset may include a digital-art version of a tangible, physical object or an object disassociated with tangible, physical objects. For example, the digital asset may include a digital-art version of physical footwear having the same or substantially the same appearance. Alternatively, the digital asset may be digital footwear generated within the digital realm and without being connected to or representative of physical footwear. Further, the digital asset may become physical through various techniques, such as by manufacturing methods based on aspects of the digital footwear that are taken as inputs to create the physical footwear.

A "smart contract" is an agreement that is in the form of a self-enforcing software program that runs on the blockchain network, so it is distributed across a blockchain network and is itself immutable. The terms within a smart contract, such as one in an NFT, are dictated by one or more of the parties. When creating a smart contract, a party or multiple parties may include programming to allow for negotiation, modification, full or partial acceptance, full or partial refusal, and, ultimately, full or partial enforcement or waiver. It will be appreciated that, as used herein, consideration is merely something of value given in exchange from one party to the other and may be real or personal property, such as, *e.g.,* currency, or may be a return promise, an act, or forbearance. Additionally, options are contracts in which an offeree gives consideration for a promise by the offeror not to revoke an outstanding offer, and options can be provided as part of a larger contract or, alternatively, the option may be the foundation of the contract itself. A smart contract in an NFT may, but need not, be legally enforceable. The code of a smart contract can include functions for reading from or writing to the smart contract. For example, a smart contract can include a function that returns information about a digital asset, or a function returning information about an owner of a digital asset. Additionally or alternatively, a function of a smart contract could be called by an owner of the contract to distribute funds exchanged in the execution of the smart contract.

As used herein, the term "cryptographic token" is a digital value that is stored/recorded on a blockchain. Cryptographic tokens include payment tokens, such as coins (*e.g.,* Bitcoin), utility tokens, security tokens, and "non-fungible tokens." As used herein, non-fungible token or "NFT" refers to a cryptoasset in the form of a unique, cryptographic token corresponding to a digital asset comprising a computer-generated virtual object and metadata therefor, including digital articles of footwear, and/or digital articles of apparel. The NFT may be a blockchain-based deed of digital ownership and/or certificate of authenticity of a digital asset. As used herein, an NFT is used to signify ownership of the digital asset. The NFT can be built (*e.g.,* minted) in accordance with contemporary and relevant standards, such as, *e.g.,* an Ethereum Request for Comments (ERC) 721 (Non-Fungible Token Standard) or ERC1155 (Multi Token Standard) among other relevant standards and as appropriate for the particular blockchain network and applications used therewith.

Further, an NFT is built or minted in accordance with the terms of a smart contract. The particular conditions and terms of a smart contract can govern details of a transaction involving the minting or transfer of an NFT, and the terms can impact the value or, at least, the perceived value of the NFT over time. For example, a smart contract can enforce a rarity of NFTs minted under the smart contract by limiting the maximum allowable number of NFTs which can be minted under the contract. In some cases, a smart contract can include terms mandating that a royalty be paid to the owner of the smart contract upon a secondary sale of an NFT. In essence, the NFT represents authentication of the transaction and serves as a record of this authentication on a blockchain ledger (*e.g.,* Bitcoin, Ethereum, and the like). As such, the NFT itself may fluctuate in value depending on various aspects of the transaction, *e.g.,* the parties involved, value exchanged, time and/or date, exclusivity, or combinations thereof, among other factors. Further, the number and/or frequency of transactions may also cause the NFT to fluctuate in value.

A digital asset can be accessible at a web address (*i.e.,* the URI) that is referenced in the NFT securing it. The web address can be a link which, when accessed, can serve the digital asset, or could serve information or metadata of the digital asset. Because of a cost associated with storing information in a NFT, the token itself may contain only enough information to identify the digital asset and prove ownership, with the rest of the information about the digital asset residing on computer systems that are not themselves nodes in the blockchain. Accessing the web address can return a list of properties of the digital asset to the user through a graphical user interface, or, alternatively, in a format that is consumable by computer programs and applications that may access the digital asset. For example, the web address could return information about the digital asset in JSON format or XML format, and the address of the digital asset itself could be included in the list of properties. A digital asset representing an article of footwear could thus have properties specifying the type of footwear, a method of manufacturing used in making the footwear, a size, a color, a closure mechanism, a feature, etc. In some cases, an address referenced in an NFT could be an application programming interface (API) endpoint that may vary information returned to the user, or implement a function based on the HTTP method through which the API endpoint is accessed. The API endpoint could allow a user or system to perform a GET, HEAD, PUT, or POST, for example, which could allow a property of the digital asset to be changed based on the operation performed. The GET and HEAD operations can be read-only operations, and can provide publicly available information about the digital asset without the need for authentication. Access to the write operations (*e.g.,* POST or PUT) of the API endpoint referenced in an NFT can require authentication, and could thus only be accessible to the manufacturer of the NFT and digital asset, for example.

A "Uniform Resource Identifier" or "URI" is a unique sequence of characters that identifies a logical or physical resource used by web technologies. URIs may be used to identify any resource, including non-virtual objects, such as locations or people, or digital information resources, such as web pages. The URI can comprise a "Uniform Resource Name" ("URN") or a "Uniform Resource Locator" ("URL").

Some embodiments of the present disclosure are directed to digital assets that can include computer-generated virtual or digital collectables, such as digital articles of apparel (*e.g.,* jackets, shirts, pants, shorts, shoes, hats, necklaces, and watches). According to some embodiments, the digital collectables may be secured and/or uniquely identified by a cryptographic token, *e.g.,* an NFT. The digital asset may be linked and/or distributed with real-world, physical products, such as tangible articles of apparel. The digital assets may be linked or distributed with a 2D or 3D design file such as a computer-aided design (CAD) model, graphical rendering, image, or drawings package from which a physical product may be produced or otherwise represented.

Some embodiments of the present disclosure are directed to NFTs that, alternatively or additionally to representing physical or digital collectables, can authenticate ownership or entitlement to a benefit. A digital asset whose ownership is tied to an NFT, for example, could be a user's account with a manufacturer or retailer for example, which could include information about transactions made by the user, products purchased, dates of activities, cumulative totals of the value exchanged for goods or services, or any other information that could be associated with a customer account. Benefits may be accrued or provided based on the information of the digital asset, and the benefits could include access to exclusive products or designs, tickets to events, discounts on products, access to digital systems, etc. Accounts provided as digital assets secured by NFTs may provide privacy benefits to individuals that may otherwise be averse to signing up for an account with a manufacturer or retailer, as purchases and activity could be associated to the NFT, without including identifying information about the user. Further, the ability to sell or transfer ownership of an account by transferring an account NFT can provide an incentive for a user to perform activities that could result in the provision of a benefit, as doing so can enhance the value of the NFT, which can correspond to a value of the digital asset secured by the NFT. Sales of an account or utility NFT can further provide a revenue stream to a manufacturer or retailer, as the originator of the NFT could receive a royalty for any secondary sales of the NFT. In other embodiments, an NFT could represent entitlement to a benefit, including, for example, access to restricted portions of a web site, access to exclusive events or products, entitlements to discounts, entitlements to integration with third-party applications such as games, etc.

NFTs can be created, recorded, or "minted" into the blockchain ledger stored in the blockchain network, and thereby stored in memory of one or more of the blockchain nodes. Further, such cryptographic tokens can be destroyed or "burned" by permanent removal from circulation in the blockchain network. Burning can be accomplished in a variety of ways, including by transferring ownership of the cryptographic token to a general, null address that is inaccessible and unowned. Manufacturers, also referred to herein as brands or organizations, may burn cryptographic tokens to create scarcity within the marketplace, or to trigger a condition, or as a result of a condition, or for security purposes. For example, a brand may release, *e.g.,* "drop," a collection of digital assets secured or identified by cryptographic tokens, and then may burn any unsold cryptographic tokens within the collection to preserve exclusivity of those sold. In another example, a brand may drop a collection of digital assets secured or identified by NFTs with the condition that purchasers may only have access to their purchased digital asset when all or a particular quantity of the collection has been purchased, which may be expedited by the brand subsequently burning unsold NFTs to meet the condition prematurely.

There are several ways a user can be enabled to unlock or acquire a cryptographic asset. In one example, upon purchase of a ticket to an event, *e.g.,* a promotional event, a unique NFT and corresponding private key are automatically generated and assigned to the user's blockchain wallet. In another example, upon entrance to an event, *e.g.,* as confirmed by geolocation via a user's smartphone, and/or scanning a digital or physical ticket terminal during first purchase, a unique NFT and corresponding private key are automatically generated and assigned to the user's blockchain wallet. In still another example, a private key is provided to the user via a printed or digital receipt, a visual or electronic ID tag (RFID or NFC) hidden in or applied to a ticket or article, a pop-up message or email sent to a personal user account, a push notification or text message sent to a smartphone, or some other record; the consumer uses the private key to link the cryptographic asset to their digital blockchain wallet. Another example may require the user to assemble the private key in part via a physical code or Unique Product Identifier (UPID), *e.g.,* a serial number, associated with the footwear (on the packaging or box, on a hang tag, under a label, embedded within a QR code on the ticket or physical footwear or packaging, embedded within a footwear, etc.) and in part via an attendance or transaction authentication code (*i.e.,* to prevent an individual from collecting a cryptographic asset while merely handling footwear in a store or being nearby but outside of an event).

Another example may require the user to "seek" cryptographic assets on footwear or at event locations, whether physical or virtual inside a metaverse or game, by using a photographic capture function or augmented reality ("AR") function on a smartphone. For this method, a private key may be provided via the validated transaction, however, the user must separately find a hidden cryptographic asset in an AR hidden within a local area before the digital asset can be transferred to their wallet (*i.e.,* the cryptographic key and the virtual object must both be separately acquired before the transfer occurs).

In a representative example, an authenticated ticket is created and assigned a UPID. Upon purchase by a consumer, the UPID may be used to unlock a cryptographic digital asset composed of a collectable digital footwear and associated with a unique non-fungible token (NFT) on a blockchain based distributed computing platform. In general, a consumer must have or procure a blockchain wallet address (*e.g.,* an Ethereum hardware wallet) to purchase, unlock, or acquire an NFT securing a cryptographic digital asset. The blockchain wallet may be used to store a private key belonging to the cryptographic digital asset and may be linked to a personal account that is registered with the original brand or host providing the ticket.

In some instances, the cryptographic digital asset may not be originally linked to a physical product, but instead may be gifted (*e.g.,* by gifting or transferring an NFT securing the cryptographic digital asset) or sold as part of a brand promotion campaign, event, moment, or experience. In some instances, the brand may host or commission a raffle, a game, a contest, a tournament, or other virtual promotion campaigns, events, moments, or experiences for which digital assets may be gifted or sold, or for which NFTs may be generated as proof of attendance or as tickets for entry, among other examples.

In some embodiments, the cryptographic digital asset may not be linked to a physical product, but instead may be sold as a ticket or pass to an event, such as, *e.g.,* a promotional, or an industry convention, or a competition that may be exclusive to professionals or amateurs or may be opened to the public. The cryptographic digital asset may be provided with mutable properties, such as, *e.g.,* attributes or characteristics or categories, that are included within the metadata of the cryptographic asset and modifiable only by authorized entities. In some embodiments, the authorized entity is the creator or author of the cryptographic digital asset. In some embodiments, the authorized entity is any user or entity having possession of a private key that can include an alphanumeric code or segment of code. The private may be unlocked or accessed in a variety of ways, such as, *e.g.,* by accomplishment of certain behaviors or performances, purchases, satisfaction of certain conditions, and the like. The private key may be separated or divided among parties, *e.g.,* users and manufacturers, for assembly thereafter by one or more authorized entities. The cryptographic digital asset, and the metadata thereof, may be updated or modified by the authorized entity, having the private key, to include data associated with the event, or data associated with the user, or data associated with a physical or digital product, among other data.

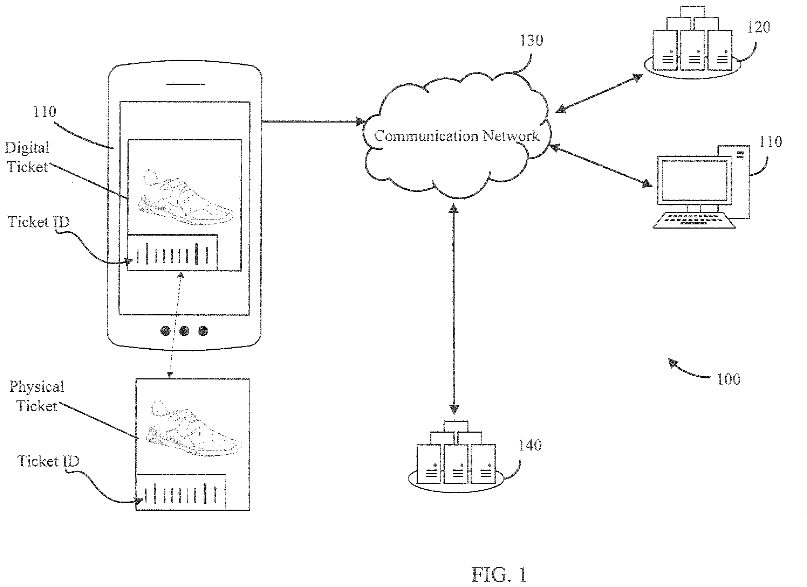

FIG. 1 illustrates an example system 100 for generating an NFT corresponding to a paired digital and physical ticket to an event, *e.g.,* a tournament or competition or promotion, in accordance with some embodiments of the disclosed subject matter. As shown in FIG. 1, the system may include one or more computing devices or user devices 110, one or more servers 120, and one or more servers 140. The digital ticket may include a ticket number or ticket ID, a barcode or QR code or other machine-readable code, details about the access granted by the ticket, and event-specific details. The physical ticket may also include a ticket number or ticket ID, a barcode or QR code or other machine-readable code, details about the access granted by the ticket, and event-specific details, as well as a stub for removal upon entrance to the event.

Still referring to FIG. 1, the one or more computing devices 110 can receive data corresponding to one or more digital tickets. Additionally, or alternatively, the one or more computing devices 110 can receive input data from a user that correspond to attributes of one or more digital tickets. The one or more computing devices 110 can execute at least a portion of the system 100 to generate one or more NFTs corresponding to the one or more digital tickets. Additionally, or alternatively, the one or more computing devices 110 can communicate data corresponding to the one or more digital tickets to one or more servers 120 and/or one or more servers 140 over one or more communication networks or connections 130.

The one or more servers 120 can execute at least a portion of the system 100. In such embodiments, the one or more servers 120 can receive data corresponding to one or more digital tickets. Additionally, or alternatively, the one or more servers 120 can receive input from a user that correspond to attributes of one or more digital tickets. The one or more servers 120 can execute at least a portion of the system 100 to generate one or more NFTs corresponding to the one or more digital tickets. Further, information about digital assets secured by one or more NFTs can be stored on the servers 140.

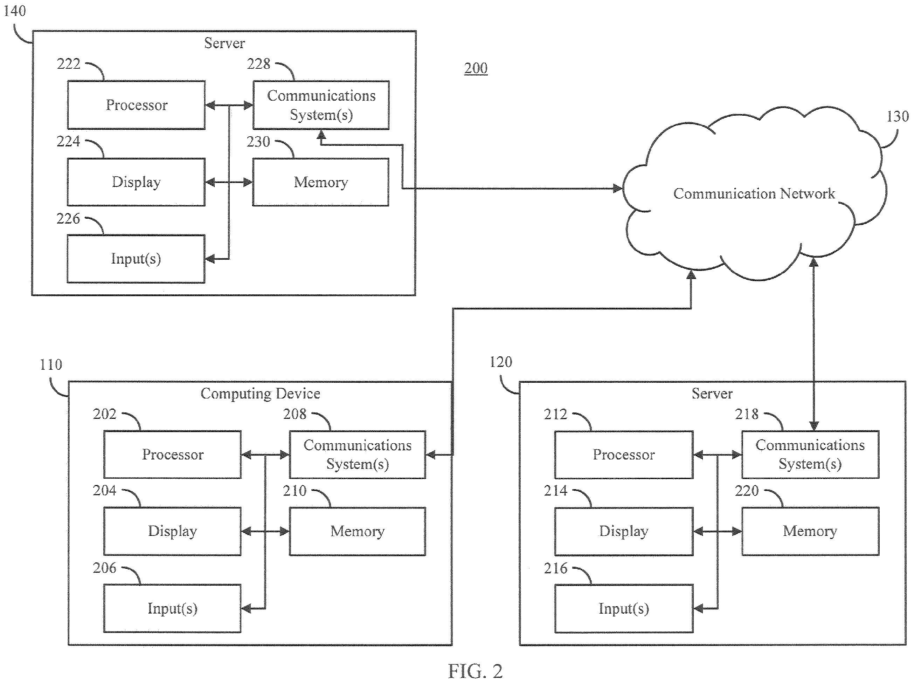

FIG. 2 shows an example of hardware 200 that can be used to implement computing device 110 and/or the servers 120 and the servers 140 in accordance with some embodiments of the disclosed subject matter. As shown in FIG. 2, in some embodiments, computing device 110 can include a processor 202, a display 204, one or more inputs 206, one or more communication systems 208, and/or memory 210. In some embodiments, processor 202 can be any suitable hardware processor or combination of processors, such as a central processing unit (CPU), a graphics processing unit (GPU), an application specific integrated circuit (ASIC), a field-programmable gate array (FPGA), *etc.* In some embodiments, display 204 can include any suitable display device, such as a computer monitor, a touchscreen, a television, *etc.* In some embodiments, inputs 206 can include any suitable input devices and/or sensors that can be used to receive user input, such as a keyboard, a mouse, a touchscreen, a microphone, a camera, etc.

In some embodiments, communications systems 208 can include any suitable hardware, firmware, and/or software for communicating information over communication network 130 and/or any other suitable communication networks. For example, communications systems 208 can include one or more transceivers, one or more communication chips and/or chip sets, *etc.* In a more particular example, communications systems 208 can include hardware, firmware and/or software that can be used to establish a Wi-Fi connection, a Bluetooth connection, a cellular connection, an Ethernet connection, etc.

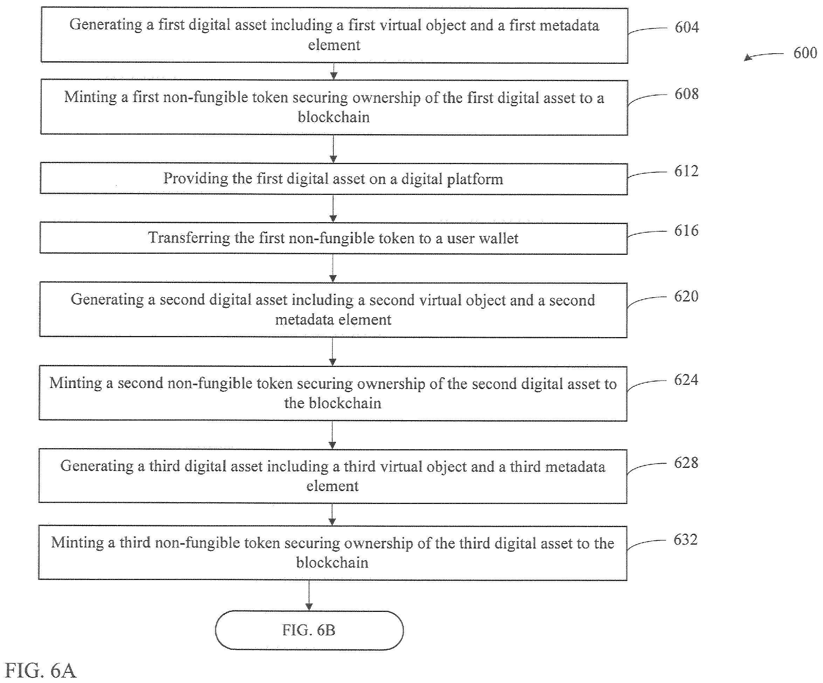

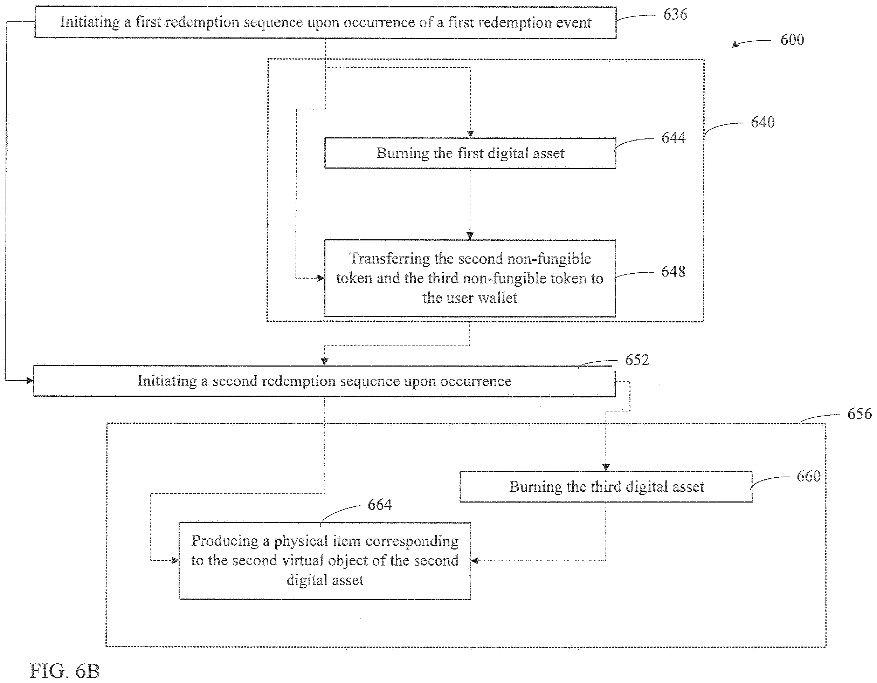

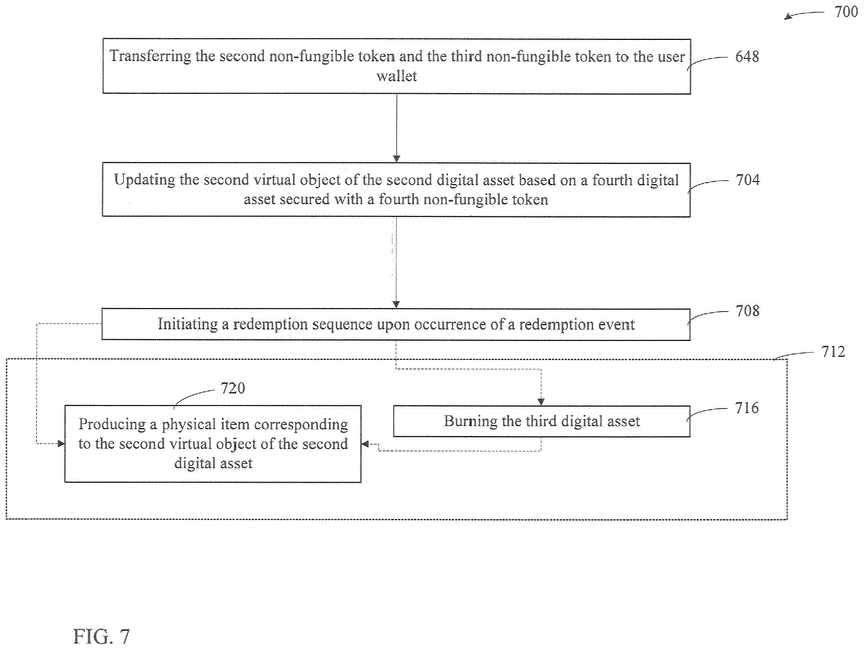

In some embodiments, memory 210 can include any suitable storage device or devices that can be used to store instructions, values, *etc.,* that can be used, for example, by processor 202 to generate an NFT, to present a digital asset using display 204, to communicate with server 120 via communications system(s) 208. Memory 210 can include any suitable volatile memory, non-volatile memory, storage, or any suitable combination thereof. For example, memory 210 can include random access memory (RAM), read-only memory (ROM), electronically-erasable programmable read-only memory (EEPROM), one or more flash drives, one or more hard disks, one or more solid state drives, one or more optical drives, *etc.* In some embodiments, memory 210 can have encoded thereon a computer program for controlling operation of computing device 110. For example, in such embodiments, processor 202 can execute at least a portion of the computer program to receive inputs from a graphical user interface for customizing an article of footwear, store in memory an image of a digital asset based on the user's customizations, generate an NFT based on the digital asset, and mint the NFT to a blockchain network made up of computing devices 110 and/or servers 120. As another example, processor 202 can execute at least a portion of the computer program to implement the system 100 for generating an NFT corresponding to a paired digital and physical ticket. As yet another example, processor 202 can execute at least a portion of process 600 and/or 700 described below in connection with FIGS. 6a, 6B, and 7.

In some embodiments, server 120 can include a processor 212, a display 214, one or more inputs 216, one or more communications systems 218, and/or memory 220. In some embodiments, processor 212 can be any suitable hardware processor or combination of processors, such as a CPU, a GPU, an ASIC, an FPGA, *etc.* In some embodiments, the display 214 can include any suitable display device, such as a computer monitor, a touchscreen, a television, *etc.* In some embodiments, inputs 216 can include any suitable input devices and/or sensors that can be used to receive user input, such as a keyboard, a mouse, a touchscreen, a microphone, a camera, *etc.*

In some embodiments, communications systems 218 can include any suitable hardware, firmware, and/or software for communicating information over communication network 130 and/or any other suitable communication networks. For example, communication systems 218 can include one or more transceivers, one or more communication chips and/or chip sets, *etc.* In a more particular example, communication systems 218 can include hardware, firmware and/or software that can be used to establish a Wi-Fi connection, a Bluetooth connection, a cellular connection, an Ethernet connection, *etc.*

In some embodiments, memory 220 can include any suitable storage device or devices that can be used to store instructions, values, *etc.,* that can be used, for example, by processor 212 to present content using display 214, to communicate with one or more computing devices 110. Memory 220 can include any suitable volatile memory, non-volatile memory, storage, or any suitable combination thereof. For example, memory 220 can include RAM, ROM, EEPROM, one or more flash drives, one or more hard disks, one or more solid state drives, one or more optical drives, *etc.* In some embodiments, memory 220 can have encoded thereon a server program for controlling operation of server 120. For example, in such embodiments, processor 212 can execute at least a portion of the server program to receive inputs from a GUI for customizing an article of footwear, store in memory (*e.g.,* memory 220) an image of a digital asset based on the user's customization, generate an NFT based on the digital asset, and/or mint the NFT to a blockchain network made up of computing devices 110 and/or servers 120. As another example, processor 212 can execute at least a portion of the server program, which can be a smart contract. to implement the system 100 for generating an NFT corresponding to a paired digital and physical ticket. As yet another example, processor 202 can execute at least a portion of process 600 and/or 700 described below in connection with FIGS. 6A, 6B, and7.

In some embodiments, the server 140 can include a processor 222, a display 224, one or more inputs 226, one or more communications systems 228, and/or memory 230. In some embodiments, the processor 222 can be any suitable hardware processor or combination of processors, such as a CPU, a GPU, an ASIC, an FPGA, etc. In some embodiments, the display 224 can include any suitable display device, such as a computer monitor, a touchscreen, a television, etc. In some embodiments, the inputs 226 can include any suitable input devices and/or sensors that can be used to receive user input, such as a keyboard, a mouse, a touchscreen, a microphone, a camera, etc.

In some embodiments, the communications systems 228 can include any suitable hardware, firmware, and/or software for communicating information over the communication network 130 and/or any other suitable communication networks. For example, the communications systems 228 can include one or more transceivers, one or more communication chips and/or chip sets, etc. In a more particular example, the communications systems 228 can include hardware, firmware and/or software that can be used to establish a Wi-Fi connection, a Bluetooth connection, a cellular connection, an Ethernet connection, etc.

In some embodiments, the memory 230 can include any suitable storage device or devices that can be used to store instructions, values, etc., that can be used, for example, by the processor 222 to present content using the display 224, to communicate with one or more computing devices 110, etc. The memory 230 can include any suitable volatile memory, non-volatile memory, storage, or any suitable combination thereof. For example, the memory 230 can include RAM, ROM, EEPROM, one or more flash drives, one or more hard disks, one or more solid state drives, one or more optical drives, etc. In some embodiments, the memory 230 can have encoded thereon a server program for controlling operation of server 140. For example, in such embodiments, the processor 222 can execute at least a portion of the server program to receive inputs from a GUI for customizing an article of footwear, store in memory (*e.g.,* memory 230) an image of a digital asset based on the user's customization, generate an NFT based on the digital asset, and/or mint the NFT to a blockchain network made up of the computing devices 110 and/or the servers 120, 140. As another example, the processor 222 can execute at least a portion of the server program to implement the system 100 for generating an NFT corresponding to a paired digital and physical footwear. As yet another example, the processor 222 can execute at least a portion of process 600 and/or 700 described below in connection with FIGS. 6A, 6B, and 7.

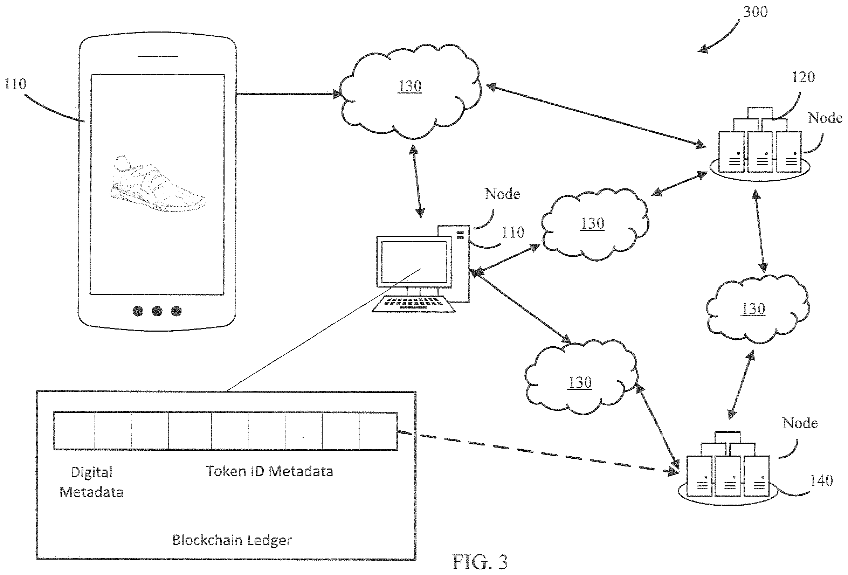

FIG. 3 illustrates an example blockchain network 300 according to some embodiments of the present disclosure. The blockchain network 300 may include one or more blockchain nodes. The blockchain nodes may each be a computing device 110 (*e.g.,* similar to computing device 110 of FIGS. 1 and 2), and a server 120 (*e.g.,* similar to server 120 of FIGS. 1 and 2) that are in communication with one another (*e.g.,* via a communication network similar to the communication network 130 of FIGS. 1 and 2). A RunNFT may be stored in a blockchain ledger stored on one or more of the blockchain nodes, *e.g.,* "minted" into the blockchain ledger stored in the blockchain network, and thereby stored in memory of one or more of the blockchain nodes. For example, metadata of the RunNFT may be stored in memory on a local computing device (*e.g.,* computing device 110), and may be copied into the memory of one or more blockchain nodes, *e.g.,* servers, such as server 120, and/or computing devices that may be similar to computing device 110. The one or more blockchain nodes may be responsible for storing data that is contained in the blockchain ledger. Each of the one or more blockchain nodes may store (*e.g.,* in memory, such as, memory 210 or 220) a copy of the blockchain ledger, *e.g.,* a deed tracking various transactions of, and modifications to, a RunNFT securing a digital asset, such as a digital article of footwear.

The information of an NFT stored in the blockchain may be minimal, as there may be a cost associated with storing information on the blockchain. Therefore, metadata of the digital asset, and the digital asset itself can be stored in a memory (*e.g.,* memory 230) or storage of the one or more servers 140. A URI can be stored with the NFT on the nodes 110, 120, and can include an address of the digital asset stored on the one or more servers 140, so that information about the digital asset can be obtained from the URI stored in the NFT, and the users of the blockchain network do not pay a disproportionate price for storing digital assets on the blockchain network.

The one or more blockchain nodes may each be a computing device located at one or more geographic locations, thereby creating a decentralized computing architecture. The blockchain network may be a public network (*e.g.,* available to any user), or a private network (*e.g.,* available to a specific set of users). For example, an organization may develop an application for storing NFTs corresponding to both digital and physical products, *e.g.,* tickets, articles of footwear, articles of apparel, headgear, and sporting equipment, among others. The application may be a mobile application, or desktop application, or web-based applet, comprising computer-readable instructions stored in, for example, memory 210 or 220, and configured to be executed by, for example, processor 202 or 212 (see FIG. 2). Any user who downloads the application onto a computing device, may then add their computing device to the blockchain network as a blockchain node. In some embodiments, the blockchain network may be private and, thus, limited to users who download the organization's application and obtain authorization to participate. If the application is available to the public, then the blockchain network may be a public network. However, if the organization restricts who has access to the application, or restricts authorization for select individuals who download the application from becoming a blockchain node, then the blockchain network may be a private network, such as *e.g.,* a permissioned network. Generally speaking, the permissioned network is a distributed ledger that is not publicly accessible and can only be accessed by users with certain permissions, and the users can only perform specific actions granted to them by the central owner or the ledger administrators and are required to identify themselves through certificates or other digital means. In some embodiments, the blockchain network may be a known blockchain network (*e.g.,* Bitcoin, Ethereum, or the like), and the permissioned network may be a sub-set or service associated with a known blockchain network.

The blockchain network may be an open, yet encrypted peer-to-peer network in which asset transaction records are linked via cryptographic hash functions in a distributed, immutable ledger of interconnected blocks. Each blockchain node may contain a ledger of blocks that includes one or more digital asset transactions accompanied by corroboration information representing a validity of each transaction as assessed by peer-validation devices, *e.g.,* the other blockchain nodes in the blockchain network. Encrypted, decentralized computing architectures allow for authentication of transacted assets while preventing duplication of ownership of a cryptography-protected ("cryptographic") digital asset registered to the blockchain network. Decentralized asset management may work by encrypting a proprietary asset file, breaking the encrypted code into segments, and sending the segments to numerous different blockchain nodes, *e.g.,* the blockchain nodes of FIG. 3, in the blockchain network. A validated owner may be provided with a private key that indicates where in the network the digital asset is located and how to reassemble or "decrypt" the file. For use as a distributed ledger, an individual blockchain may be managed by a host administrator and distributed to multiple peers collectively adhering to a protocol for inter-node communication and transaction validation.

The RunNFT may be stored in the blockchain network, and may represent ownership of a specific digital asset. The RunNFT may include, or may reference metadata corresponding to a digital ticket, *e.g.,* a 2D representation or a 3D representation of an object that is part of or comprises a ticket, and the ticket ID. The ticket ID may be a 32-bit, 64-bit, or 128-bit alphanumeric code that is sectioned into individual segments. For example, the alphanumeric code may be sectioned into 2 segments, 4 segments, 8 segments, 16 segments, or 32 segments. The RunNFT can include a URI specifying a location where metadata of the digital asset can be located. The metadata provided at the web address specified, which may correspond to the one or more of the code segments, can serve a list of attributes between the digital ticket and an event, moment, experience, or article corresponding to the digital ticket. The metadata provided at the web address specified can serve a list of attributes of the digital asset in JSON format that is provided in accordance with contemporary and relevant standards, such as, *e.g.,* an Ethereum Request for Comments (ERC) 721 (Non-Fungible Token Standard) or ERC1155 (Multi Token Standard), among other relevant standards and as appropriate for the particular blockchain network and applications used therewith. This metadata can be stored on the one or more servers 140, which can be controlled by the manufacturer or the retailer, or could alternatively be stored in other servers or computing systems, such as cloud-based hosting servers, for example. Additionally or alternatively, the one or more code segments may correspond to attributes of the event, moment, experience, or article, or solely the digital ticket.

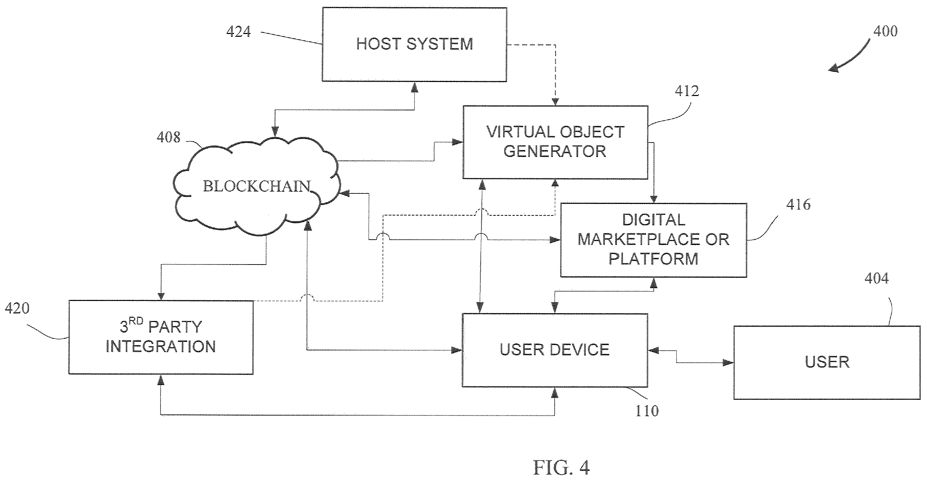

In some embodiments, metadata of an article of footwear can be stored on the servers 140 that are generally similar to servers 120, but are not part of the blockchain network. For example, in some embodiments, it can be advantageous to include attributes of an article of footwear in a NFT that could not be encoded in a 32-bit, 64-bit, or 128-bit code. An attribute footwear, for example, could have a custom design that does not correlate to a designated value within the code in the NFT, and would therefore need to be specified outside of the code. A cost of storing this information on a blockchain node can further be prohibitive to including additional information about an attribute footwear, which can in turn increase a cost of the NFT and impose practical limitations on the amount and structure of the data stored in an NFT. Further, third-party applications may require attributes of an NFT to be differently formatted to read and interpret the attributes of an NFT. An NFT marketplace, for example, can expect information of an NFT to be in JSON format or XML format in order to accurately represent information about the NFT, in accordance with the ERC 721 and/or the ERC 1155 standards. Thus, in some embodiments, metadata of the attribute footwear can be stored on nodes that are not themselves blockchain nodes. This metadata can, for example, be in JSON format and can provide an unlimited number of attributes of an article of footwear in custom fields of the JSON object. The JSON payload can be accessible at a web address, *e.g.,* a URL endpoint, that is hosted remotely and the endpoint can be provided in the body of the NFT as a URI, according to the ERC 721 and ERC 1155 standards. Thus, third-party applications, *e.g.,* third-party integration 420 in Fig. 4, such as video games or online NFT marketplaces could read the URI from the body of the NFT, and access the remote, off-chain web address specified in the URI to obtain information about the attribute footwear. The computing nodes used to store metadata of an attribute footwear could be hosted by the provider of the NFT, and can be updated by the provider, or could be hosted on a third-party NFT hosting service in the cloud, which could, for example, ensure immutability of the NFT.

In some examples, the metadata provided at the URI address specified in the NFT and hosted on the servers 140 can correspond to one or more attributes associated with an event, including an event location, data associated with an event, or a level of access or priority provided by a ticket, or attributes associated with the manufacture or design of a physical article, including a footwear image, footwear size, footwear style, footwear fit, footwear color, outsole pattern, location of manufacture, date of manufacture, or date of purchase. Additional combinations of the above-listed attributes should be recognized by those of ordinary skill in the art.

The attribute footwear style may comprise metadata corresponding to Lows, Mids, Sandals, or Boots. The footwear size may comprise metadata corresponding to 4, 4.5, 5, 5.5, 6, 6.5, 7, 7.5, 8, 8.5, 9, 9.5, 10, 10.5, 11, 11.5, 12, 12.5, 13, 13.5, 14, 14.5, 15, 15.5, 16, 16.5, 17, 17.5, 18, or 18.5 in U.S. Men's sizes. It should be understood that metadata may correspond to similar sizes in Women's sizes, children's sizes, unisex sizes, and footwear size measurements of foreign countries. The footwear color segment may comprise metadata corresponding to Black, Gray, Brown, Blue, Green, Orange, Tan, Yellow, Red, White, Multi-Colored, or Pink. The footwear style segment may comprise metadata corresponding to Basketball, Running, Motorsport, Soccer, or Training. The footwear fit segment may comprise metadata corresponding to Regular fit, or Narrow fit.

One should appreciate that the disclosed systems and techniques provide many advantageous technical effects including construction and storage of a digital asset blockchain representing user-to-user transactions of virtual collectables. Further, the blockchain technology enables the creation of unique, yet fully transferrable digital assets that maintain value by way of the general inability to make lossless copies, unlike traditional, unsecured digital files.

FIG. 4 provides a schematic representation of a functional structure of a decentralized computing system or blockchain network 400, similar to the blockchain network 300 of FIG. 3. As generally illustrated, a user 404 may operatively interface with the user device 110 that may include one or more of a smartphone, a tablet computer, a smart watch, a laptop computer, a desktop computer, a standalone video game console, smart footwear/apparel, or other similar internet enabled devices, *e.g.,* a television, an exercise machine or device, or a vehicle, among other examples. The user device 110 may be operatively configured to communicate with one or more of an immutable public database (*e.g.,* a blockchain service/network 408-referred to as "blockchain network 408"), a virtual object generator 412, an online digital marketplace or platform 416, and/or a third (3^{rd}) party integration service 420.

In general, the blockchain network 408 may include at least one NFT registered thereon that includes or references information representative of a digital asset. The user 404, via the user device 110, may be in possession of or may have a user wallet that includes a private cryptographic key that permits the user device to read the encrypted data associated with the NFT. This key may further enable the user 404 to freely transfer ownership of the NFT.

A virtual object generator 412 may be provided to create a virtual object associated with a digital asset. The virtual object generator 412 may employ a plurality of style and artistic rules such that the resultant digital objects are unique, yet recognizable according to predefined silhouettes, styles, articles, or characters. In some embodiments, the virtual object generator 412 may create the virtual object on the basis of auxiliary factors, such as the age of the asset, user activity (tracked via the user device), or use via third party platform. The virtual object generator 412 and/or blockchain network 408 may further be in communication with a hosted digital marketplace 416, forum, social platform, or the like. The digital marketplace 416 may represent a plurality of virtual objects in a manner that permits the organized trade and/or sale/purchase of the virtual objects between parties. Upon closing of the sale or transfer, the digital marketplace 416 may update the blockchain network 408 with the new ownership information and facilitate the transfer of new or existing keys to the new asset holder. In some embodiments, the digital marketplace 416 may further enable various social engagement functions, such as voting or commenting on the represented virtual objects. Likewise, in some instances the digital marketplace 416 may be configured to assess and score the scarcity of a particular virtual object based on the sum total of the object's expressed features or characteristics, as well as consideration of any of the auxiliary factors. Such a scarcity score may then enable the marketplace (and/or users who participate within the marketplace) to better assess the value of the object.

Further, the system 400 may further include a 3rd party integration service 420 that may enable the use of the virtual object in different contexts or manners. The 3rd party integration service 420 may operate as an API on an app provided on the user's device, or as a dedicated cloud based service. In some embodiments, the 3rd party integration service 420 may make the virtual object, *e.g.,* as expressed by the virtual object generator 412, and/or the information available for external use. Examples of such a use may include skins on 3rd party video game characters, objects capable of being used by 3rd party video game characters, digital artwork displays, physical 2D print generation, manufacturing production, such as, *e.g.,* 3D print generation, and the like. In one embodiment, the information and/or scarcity score may be made available and may alter the characteristics or abilities of a user's video game character in a video game played on the user's device 110.

A corporate host system 424 may be in communication with the blockchain network 408 for the purpose of provisioning, initially creating new digital assets, and/or storing metadata therefor. Additionally, the host system 424 may provide one or more rules to the virtual object generator 412 to constrain the manner and style in which genomic information from the blockchain network 408 is expressed in a visual/artistic form.

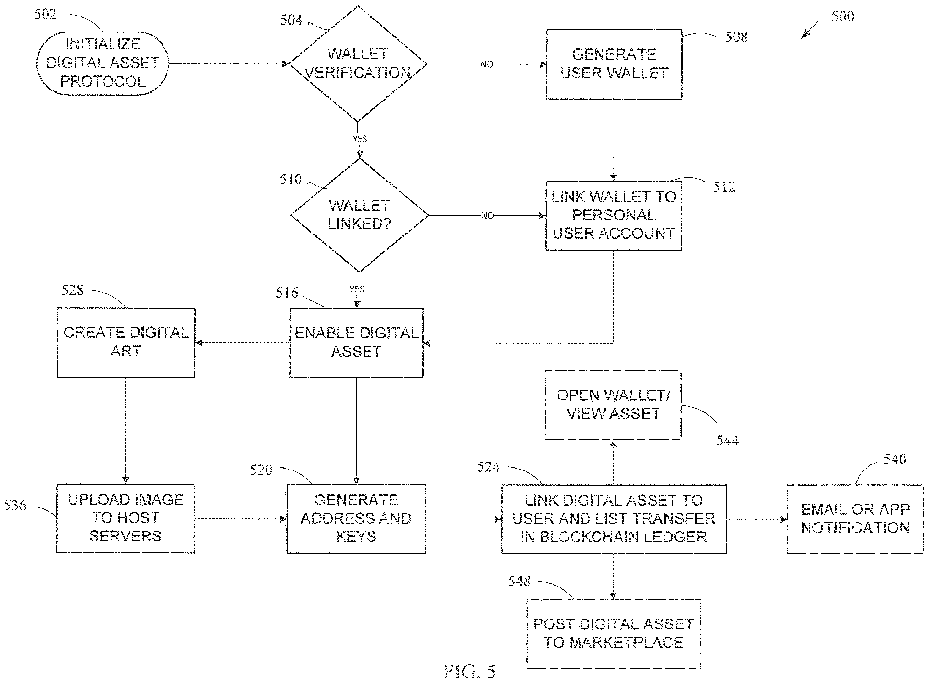

With reference to FIG. 5, a method of generating a digital asset protected by NFTs on a blockchain ledger is generally described in accordance with aspects of the present disclosure. Some or all of the operations in FIG. 5 and described in further detail below may be representative of an algorithm that corresponds to processor-executable instructions that may be stored, for example, in main or auxiliary remote memory, and executed, for example, by a resident or remote controller, central processing unit (CPU), control logic circuit, or other module or device or network of devices, to perform any or all of the above or below described functions associated with the disclosed concepts. It should be recognized that the order of execution of the illustrated operation block may be changed, additional blocks may be added, and some of the blocks described may be modified, combined, or eliminated.

The method 500 of FIG. 5 starts at terminal block 502 with processor-executable instructions for a programmable controller or control module or similarly suitable processor to call up an initialization procedure for a protocol to generate a cryptographic digital asset, such as a computer-generated digital article of footwear and encrypted token key, for a consumer product. This routine may be called-up and executed in real-time, continuously, systematically, sporadically, and/or at regular intervals. As a representative implementation of the methodology set forth in FIG. 5, the initialization procedure at block 502 may automatically commence each time an authentic article of footwear is manufactured, at various stages of the supply chain and manufacturing process, each time a user 404 purchases a real-world article of footwear or a ticket to an event or a cryptographic digital asset, or each time the user 404 unlocks an access key. Alternatively, the initialization procedure may be manually activated by an employee at a POS terminal or by the manufacturer.

Other initialization procedures may be initiated for different digital assets, which may represent assets other than footwear. For example, a digital asset could represent a proof of attendance at a given event. Accordingly, the digital asset could be instantiated upon a confirmation of attendance at an event. Alternatively, a limited number of proof of attendance NFTs may be minted for an event, and those NFTs may be earned by attendees on a first-come first-serve basis, or attendees could earn the remaining NFTs by scanning a QR code, for example. Digital assets can correspond to utility NFTs, which can provide a functionality to the owner. For example, a digital asset can entitle the owner to access to benefits or exclusive content, *e.g.,* as discussed further below and with respect to FIG. 6.

Using a user device 110, such as, *e.g.,* a portable electronic device, including a smartphone, or other electronic device, the user 404 may launch a dedicated mobile software application (app) or web-based applet that collaborates with a server-class (backend or middleware) computer (*e.g.,* a remote host system) to communicate with the various peer devices on the decentralized computing system 400. During a communication session with, *e.g.,* the host system 424, the user 404 may purchase an article of footwear using a corresponding feature provisioned by the app. The user 404 enters the personal information and a method of payment to complete the transaction. Upon completion of a validated payment, the host system 424 receives, *e.g.,* from an online store transaction module or an approved third-party electronic payment system, a transaction confirmation to indicate a validated transfer of the article of footwear to the user 404 has been completed. As indicated above, validated transfer of the footwear may be effectuated through any available means, including at a brick-and-mortar store, through an online auction website, an aftermarket consumer-to-consumer trade/sale, etc. In other embodiments, the user 404 may perform other transactions, or purchase other products. For example, the user 404 may purchase a digital asset represented by an NFT directly or may purchase a product other than an article of footwear, which may have a digital asset associated therewith. A user 404 may receive an NFT representing ownership of a digital asset without performing a transaction, for example, by earning the NFT through attendance at an event, or performance in an event, or by logging in to a platform or marketplace at predetermined times.

Next, the method 500 proceeds to decision block 504 to determine if the user 404 has procured a cryptocurrency user wallet, also referred to herein as a cryptocurrency wallet or digital wallet or user wallet, or other similarly suitable digital blockchain account that is operable, for example, to upload and maintain location and retrieval information for digital assets that are encrypted and stored in a decentralized manner. A cryptocurrency wallet typically stores public and private key pairs, but does not store the cryptocurrency or token itself; the cryptocurrency or token is decentrally stored and maintained in a publicly available blockchain ledger. With the stored keys, the owner may digitally sign a transaction and write it to the blockchain ledger. A platform-dictated smart contract associated with the wallet may facilitate transfer of stored assets and create a verifiable audit trail of the same. If the user 404 has not already acquired a digital blockchain wallet, the method 500 continues to predefined process block 508 to set up a wallet. By way of non-limiting example, user 404 may be prompted to visit or may be automatically routed to any of an assortment of publicly available websites that offer a hardware wallet for cold storage of cryptocurrency such as an ERC20-compatible Ethereum wallet provided by MyEtherWallet, or Metamask, among other viable sources or providers.

Once the system confirms that the user 404 has a suitable digital blockchain wallet at process block 504, the method 500 may check if the wallet is linked to a personal user account at decision block 510. In some instances, the user 404 may have already linked a wallet to a user account in a prior transaction and thus, the method 500 could proceed to process block 516. Where the user 404 has not linked their wallet, the method 500 may automatically link, or prompt the user 404 to link, the digital blockchain wallet to a personal user account, as portrayed at process block 512 of FIG. 5. This linking at process block 512 may proceed automatically if a wallet was generated at process block 508, without the need to perform a check at decision block 510 of whether the wallet has been linked. Linking a wallet to a personal account at process block 512 may require the remote host system 424 to retrieve a unique owner ID code associated with the purchasing party (*e.g.,* user 404) from an encrypted relational database (*e.g.,* provisioned through cloud computing system 130). At this time, a unique physical footwear ID code associated with the purchased footwear may be linked to the user's personal account.

Upon determining that the user 404 has acquired a digital blockchain wallet, *i.e.,* block 504 = YES, and that the wallet is linked to a personal user account, *i.e.,* block 510=YES, or after linking the user's blockchain wallet to their personal user account at block 512, the method 500 continues to input/output block 516 to enable a cryptographic digital asset associated with the footwear. As indicated above, after purchasing the footwear, the universally recognized UPID product code may be used to retrieve a collectable footwear NFT which is identified by an encrypted token key, and is generally associated with a collectable digital footwear. In some embodiments, the UPID may be used to trigger a function of the footwear NFT, such as compensation for a third party, *e.g.,* a fitter, associated with or identified by the metadata of the footwear NFT. A third-party or a retailer at a POS terminal or the user 404 employing their user device 110 may scan the UPID or UPC on the footwear or a box storing therein the footwear. Accordingly, enabling a cryptographic digital asset, at block 516, may be automatic, random, systematic, prize based, or performed in any logically appropriate manner.

After receiving confirmation that a cryptographic digital asset has been authorized at input/output block 516, the method 500 generates a cryptographic digital asset for the transacted footwear. This may comprise generating a unique, encrypted asset code with a contract address (*i.e.,* the address where the smart contract is deployed on the blockchain network), a token, and a public and private key pair, as denoted at predefined process block 520. Host system 424 may transmit the token, with the public key and the owner ID, to a distributed blockchain ledger to record and peer-validate transfer of the cryptographic digital asset to the user 404 on a transaction block. The method 500 continues to process block 524 to link the cryptographic digital asset with the unique owner ID code. This control logic may comprise executable instructions for assigning the encrypted asset code to the user 404 and storing the public and private keys in the user's digital blockchain wallet. As illustrated in FIG. 5, once the digital asset has been linked to the user 404, as through transfer to the user of the NFT securing the digital asset, optional process block 540 may issue a digital notification, such as an email or push notification, to the user's smartphone 110, or other electronic device, with all related information for accessing, transferring and intermingling the cryptographic digital asset. Additionally or alternatively, the remote host system 424 may operate as a web server hosting a web-based graphical user interface (GUI) that is operable to translate the data stored in the encryption keys into a visual image that is displayed to the user 404 at optional process block 544. Digital asset manipulation and use may also be effectuated through the user's digital blockchain wallet. This may comprise posting the cryptographic digital asset to an online crypto-collectable marketplace or platform, as provided in optional process block 548.

With continuing reference to FIG. 5, in some embodiments, after a digital asset is enabled or initialized at block 516, the method 500 can proceed to process block 528 to produce a virtual representation or "digital art" of the cryptographic digital asset. The virtual representation may include a computer-generated avatar of the footwear or a limited-edition artist rendition of the footwear. It is also envisioned that one or more attributes of the virtual representation of the cryptographic digital asset may be created, in whole or in part, via the user 404. Alternatively, a machine learning function may be executed to generate image features through a neural network to produce the digital art at process block 528. Upon completion of the digital art, the image may be uploaded to cloud computing system 130 at block 536, and the digital art can be included as part of the digital asset.

Generally, by incorporating metadata into the non-fungible token (NFT), or digital asset secured by the NFT, that corresponds to attributes of a physical article of footwear or a digital model for the manufacture of a physical article of footwear, the digital article of footwear corresponding to the NFT will be linked to the physical article of footwear. For example, the digital footwear may appear to be the same size, color, and material on a display screen (*e.g.,* display screen of computing device 110) as a corresponding physical footwear. In some embodiments, the metadata includes reference to a UPID that corresponds to the physical code, or a version thereof, associated with the physical footwear, thereby linking the footwear NFT to the physical footwear in a one-to-one fashion. In some embodiments, the footwear NFT may be provided as a collection or family of footwear NFTs having, *e.g.,* variations or permutations in attributes or appearance or underlying metadata, but with each footwear NFT in the collection being linked to the same physical footwear by way of reference to the UPID in the metadata. In this way, multiple footwear NFTs can be generated for a single model or edition of a physical footwear, and each footwear NFT can further represent a unique digital footwear. The footwear NFTs can, therefore, be a collection of two (2) or more, such as, *e.g.,* a collection of 3, 4, 5, 6, 7, 8, 9, 10, 11, 12, or more, a collection of 20 or more, a collection of 50 or more, a collection of 100 or more, a collection of 250 or more, or a collection of 500 or more.

Generally speaking, when a cryptographic digital asset, secured by an NFT, is generated by a developer, *e.g.,* an author or creator, the developer may write various restrictions into the smart contract of the NFT securing the cryptographic digital asset. In some instances, the developer may restrict access to metadata of the cryptographic digital asset, such that only certain portions of the metadata may be updated or modified by only certain users. For example, the developer may retain exclusive editable access to the metadata and permit view-only or read-only access of the metadata by subsequent owners or third-parties. In another example, the developer may permit subsequent owners or third-parties to have editable access to specific portions of the metadata. In still another example, the developer may allow subsequent owners to have editable access to the metadata and may provide third-parties with view-only or read-only access. The digital asset could thus have certain editable or mutable properties of the metadata. In some cases, an address referenced in an NFT could be an API endpoint that may vary an information returned to the user, or implement a function based on the HTTP method through which the API endpoint is accessed. The API endpoint could allow a user or system to perform a GET, HEAD, PUT, or POST, for example, which could allow a property of the digital asset to be changed based on the operation performed. Access to the API endpoint referenced in an NFT can be predicated on verification of ownership of the NFT. Those skilled in the art will appreciate that accessing, writing, and/or modifying the metadata of the cryptographic digital asset may be accomplished by, *e.g.,* using a "getTokenUri" and/or a "setTokenUri" function, or equivalents thereof, in compliance with the relevant standard, *e.g.,* ERC-721 or the like.

FIGS. 6A and 6B illustrate a flowchart of an example process 600 of using an NFT. Referring specifically to FIG. 6A, Step 604 includes generating a first digital asset including a first virtual object and a first metadata element. The first digital asset may be a digital pass or ticket that is configured to be purchased by a user for the purpose of accessing or unlocking additional benefits, such as, *e.g.,* acquiring rights to receive physical or virtual products at a later time or after redemption of the first digital asset. The first virtual object of the first digital asset may be a digital artwork that is representative of a ticket, a pass, a box, or a package. In some embodiments, the first virtual object is configured to be an animated video clip, *e.g.,* a graphic interchange format (GIF), or any other suitable file format, *e.g.,* WEBP, TXT, PNG, MP4, MP3, and the like. The first virtual object may be stored in a server, such as server 140, and connected to the first digital asset via a URL, such that the first virtual object is stored off-chain when the first virtual object is minted to the blockchain. Additionally, the first virtual object may be updated or modified by the Brand. The first digital asset may comprise a plurality of digital assets having similar or identical digital artwork used for each first virtual object. Further, the Brand may update or modify the first virtual object simultaneously across the plurality of digital assets, or the Brand may update each first virtual object of the plurality of digital assets individually. In addition, the first metadata element of the first digital asset is at least one of a URL, a product identifier, such as a UPID or UPC, a user identifier, such as a user registration number or account number, a condition, an execution, such as a royalty payment or a security feature, or any other metadata associated with the first digital asset.

Step 608 includes minting a first non-fungible token securing ownership of the first digital asset to a blockchain. In some instances, the blockchain network is a public, permissionless network, such as Ethereum. In some embodiments, the blockchain network is a private network that is accessible only by authorized users and is hosted by a corporate host, such as the host system 424, which may be the Brand. Step 612 includes providing the first digital asset on a digital platform, such as the platform 416, where the digital asset can be accessed and viewed, and where transactions involving the digital asset may be conducted. For example, users on the digital platform may be able to purchase the digital asset, trade or swap the digital asset with other digital assets, spend the digital asset in return for benefits or functions, and sell the digital asset to the Brand or to other users. Step 616 includes transferring the first non-fungible token to a user wallet connected to the digital platform 416, which may be accomplished similar to the process 500 of FIG. 5. In some embodiments, the digital platform 416 compiles a list of user wallets that meet predetermined conditions. Such predetermined conditions may include, for example, prior or contemporaneous transactions involving assets, such as digital assets or physical products, associated with the Brand, or a determination of a geographic location of the user device 120 using, e.g., a GPS sensor, which lies within a predetermined geographic area, such as a geofenced area, or a total asset value contained within the user wallet, among others. In some embodiments, a user wallet meeting one or more predetermined conditions may be notified, e.g., via a push notification or other suitable electronic message, with an address, e.g., a URL, where the first digital asset may be available, with or without requiring purchase, during a future window of time for transfer to the user wallet. Step 620 includes generating a second digital asset including a second virtual object and a second metadata element. Step 624 includes minting a second non-fungible token securing ownership of the second digital asset to the blockchain. Step 628 includes generating a third digital asset including a third virtual object and a third metadata element. Step 632 includes minting a third non-fungible token securing ownership of the third digital asset to a blockchain.

As described in connection with the first digital asset, the second and third digital assets may be a digital pass or ticket that is configured to be purchased by a user for the purpose of accessing or unlocking additional benefits, such as, *e.g.,* acquiring rights to receive physical or virtual products at a later time or after redemption of the first digital asset. The second virtual object of the second digital asset may be a digital artwork that is representative of an article of apparel or footwear, or any physical item or product, such as, e.g., a digital representation of an article of footwear. In some embodiments, the second virtual object is configured to be used as a profile picture associated with a user account on the digital platform 416. The third virtual object of the third digital asset may be representative of a ticket, a pass, a box, or a package. In some embodiments, the second and third virtual objects are configured to be animated video clips, *e.g.,* a graphic interchange format (GIF), or any other suitable file format, *e.g.,* WEBP, TXT, PNG, MP4, MP3, and the like. The second and third virtual objects may be stored in a server, such as server 140, and connected to the second and third digital asset, respectively, via a URL, such that the second and third virtual objects are stored off-chain when the second and third virtual objects are minted to the blockchain. Additionally, the second and third virtual objects may be updated or modified by the Brand. In some embodiments, the digital platform 416 and/or other computing devices 120, 140 of the Brand may update the second digital asset and/or the third digital asset based on digital access or participation within a virtual lobby or world, such as, *e.g.,* a webspace or web portal. The second and third digital assets may each comprise a plurality of digital assets having similar or identical digital artwork used for each respective second and third virtual object. In some embodiments, the virtual lobby or world may only be accessible by user wallets holding the first digital asset, such that the second and third digital assets are accessible only after the virtual lobby or world is accessed and/or experienced. In some embodiments, updates or modifications to the second or third digital assets may be predicated on the particular virtual lobby or world experienced.

Further, the Brand may update or modify the second and third virtual objects simultaneously across each of the plurality of digital assets, or the Brand may update each second virtual object of the plurality of digital assets individually and each third virtual object of the plurality of digital assets individually. In addition, the second metadata element of the second digital asset and the third metadata element of the third digital asset are each at least one of a URL, a product identifier, such as a UPID or UPC, a user identifier, such as a user registration number or account number, a condition, an execution, such as a royalty payment or a security feature, or any other metadata associated with the first digital asset.

Turning to FIG. 6B, the method 600 further comprises Step 636 that includes initiating a first redemption sequence 640 upon occurrence of a first redemption event. The first redemption event may be at a predetermined time or an expiration of a predetermined window of time, a behavior or action of the user, a behavior or action of the Brand, a condition or occurrence within the physical realm, a condition or occurrence within the virtual realm, or the like. For example, where the first digital asset comprises a plurality of digital assets, the first redemption event may be triggered by the condition of all of the plurality of digital assets being transferred to respective users, such as, *e.g.,* via purchases made through the digital platform 416. In some examples, the first redemption event is triggered automatically upon expiration of a predetermined window of time, such as, *e.g.,* the end of a 24-hour period during which the plurality of digital assets are available for purchase via the digital platform 416. In other words, a claim date may be defined as the expiration of the predetermined window of time, and the first redemption event may be triggered upon occurrence of the claim date to initiate the first redemption sequence 640. In some examples, the first redemption event is triggered entirely on demand by the Brand. In some examples, the first redemption event is triggered and, subsequently, authorization from the user is obtained via the digital platform 416 before proceeding in the method 600.

In some embodiments, the first redemption sequence 640 comprises burning the first digital asset, as in Step 644, and transferring the second non-fungible token and the third non-fungible token to the user wallet, as in Step 648. In some embodiments, the first redemption sequence 640 may occur simultaneously when the first redemption event is triggered. The first redemption sequence 640 may be triggered at some predetermined time after the first redemption event. In some embodiments, the first redemption sequence 640 requires burning the first digital asset before the second digital asset and third digital asset are transferred to the user wallet, such that Step 644 must occur before Step 648. In other embodiments, the first redemption sequence 640 may comprise transferring the second non-fungible token and the third non-fungible token to the user wallet before burning the first digital asset, such that Step 648 may occur before Step 644. The first redemption sequence 640 preferably includes at least one of Step 644 and Step 648. It is contemplated that minting the second non-fungible token, as in Step 624, and/or minting the third non-fungible token, as in Step 632, may occur as part of the first redemption sequence 640, such as after burning the first digital asset in Step 644 and before transferring the second and third non-fungible tokens to the user wallet in Step 648. It is further contemplated that burning the first digital asset in Step 644 may be the first redemption event, such that the first redemption sequence 640 is initiated simultaneously with Step 644.

The method 600 further comprises Step 652 that includes initiating a second redemption sequence 656 upon occurrence of a second redemption event. The second redemption event may be at a predetermined time or an expiration of a predetermined window of time, a behavior or action of the user, a behavior or action of the Brand, a condition or occurrence within the physical realm, a condition or occurrence within the virtual realm, or the like. For example, where the second digital asset comprises a second plurality of digital assets and the third digital asset comprises a plurality of third digital assets, the second redemption event may be triggered by the condition of all of the plurality of second digital assets and/or the plurality of third digital assets being transferred to respective users, such as, *e.g.,* via purchases made through the digital platform 416. In some examples, the second redemption event is triggered automatically upon expiration of a predetermined window of time, such as, *e.g.,* the end of a 24-hour period during which the second plurality of digital assets and/or the third plurality of digital assets are available for purchase via the digital platform 416. In other words, a claim date may be defined as the expiration of which the predetermined window of time, and the first redemption event may be triggered upon occurrence of the claim date to initiate the second redemption sequence 656. In some examples, the second redemption event is triggered entirely on demand by the Brand. In some examples, the second redemption event is triggered and, subsequently, authorization from the user is obtained via the digital platform 416 before proceeding in the method 600.

In some embodiments, the second redemption sequence 656 comprises burning the third digital asset, as in Step 660, and producing a physical item corresponding to the second virtual object of the second digital asset, as in Step 664. In some embodiments, the second redemption sequence 656 may occur simultaneously when the second redemption event is triggered. The second redemption sequence 656 may be triggered at some predetermined time after the second redemption event. In any case, the second redemption sequence 656 occurs subsequently to the first redemption sequence 640, such that the first redemption event and the second redemption event occur at different times. In some embodiments, the second redemption sequence 656 requires burning the third digital asset before the second digital asset and third digital asset are transferred to the user wallet, such that Step 660 must occur before Step 664. The second redemption sequence 656 preferably includes at least one of Step 660 and Step 664. For example, the second virtual object may be a digital representation of an article of footwear that is associated with a unique product identifier (UPID) stored within the second metadata element and/or the third metadata element, and initiation of the second redemption sequence 656 results in the manufacture of a physical article of footwear based on the second virtual object and having the UPID printed or affixed physically thereon.

The second virtual object of the second digital asset is configured to be modifiable by the user and/or Brand. In some embodiments, the user is permitted to modify the second virtual object based on digital artwork associated with a fourth digital asset. In some embodiments, the fourth digital asset is generated by and/or associated with a third-party, other than the Brand. In some embodiments, the user is only permitted to modify the second virtual object with digital artwork associated with certain third-parties, or with the Brand. For instance, the Brand may secure modification or mutability of the second virtual object of the second digital asset by implementing a barrier, such as, *e.g.,* requiring registration of a user account, or identification of a user via login information, or requiring payment, or requiring particular behaviors, or some combination thereof. Such barrier may be configured as a pop-up window or splash screen or push notification sent to a user upon accessing, *e.g.,* the second virtual object via a URL. In a similar fashion, the Brand may secure transfer of the first digital asset, the second digital asset, and/or the third digital asset using such barriers.

FIG. 7 illustrates an example flow chart of a method 700 of updating the second virtual object. After the second digital asset and the third digital asset are transferred to the user wallet, as in Step 648, the second virtual object of the second digital asset may be updated based on a fourth digital asset secured with a fourth non-fungible token, as in Step 704. That is, once the user is in possession of the second digital asset, the user may be permitted to modify the second virtual object of the second digital asset to display digital artwork, colors, features, or the like associated with another digital asset secured by another NFT. Accordingly, the NFT is configured to be modified or updated by, *e.g.,* the user, the Brand, or other authorized parties. In some instances, the NFT can be updated or modified automatically, without the user's awareness or initiation. In some instances, the NFT can only be modified after approval is provided by the user or Brand. It is to be understood that modifying the NFT may not include modifying the NFT directly and can instead include updating the metadata of the digital asset referenced in the URI of the NFT.

In Step 708 of FIG. 7, a redemption sequence 712 is initiated upon occurrence of a redemption event, such as the second redemption sequence 652 of FIG. 6. The redemption sequence 712 can comprise burning the third digital asset, as in Step 716. Further, the redemption sequence 712 may comprise producing a physical item corresponding to the second virtual object of the second digital asset, as in Step 720. In some embodiments, the second virtual object has been modified in Step 704 before the corresponding physical item is produced in Step 720, and the physical item reflects such modifications. It is to be understood that modifying or updating an NFT, as described herein, includes modifying or updating the digital asset or virtual object associated with the NFT. Thus, updating the NFT may not include altering a property of the NFT itself, but may instead include adding, removing, or modifying metadata elements of the virtual object or digital asset associated off-chain. Therefore, any reference to updates to the NFT should be understood to include both direct modifications of the NFT, and modifications of the digital asset. It is contemplated that updating the second virtual object may only be permitted at certain times or under certain conditions, such as after the physical item is manufactured in Step 720 or before transactions, *e.g.,* purchases or trades or swaps, associated with the second digital asset.

The Brand may offer various NFTs having different levels or degrees of mutability or modification and that afford various functionalities and benefits. In some embodiments, the Brand may generate a first level of NFTs that have only a single modifiable attribute or setting. A second level of NFTs can be configured to allow for modification of multiple predetermined settings or attributes included in the metadata. In some embodiments, the predetermined settings or attributes can be updated based on various conditions or events, such as, *e.g.,* purchase of digital assets created by or associated with certain third-party entities or individuals. It is further contemplated that the second digital asset can be transferred by the user to a third-party, such as through a transaction occurring on the digital platform 416, and the third-party may be provided with access to the second redemption sequence 656 and/or the redemption sequence 712, such that the third-party may receive the physical item corresponding with the second virtual object of the second digital asset.

The NFT may represent digital ownership of a digital asset including a virtual object that may be created or commissioned to be created by the Brand. The NFT can represent a digital asset that includes a virtual object and a design model. The design model may be a computer aided design (CAD) file, which may be converted to a stereo lithography (.stl) file that can instruct a manufacturing system for processing. Additionally or alternatively, a variety of CAD file formats may be used, such as, *e.g.,* STEP, QIF, JT, 3D PDF, IGES, ACIS, Parasolid, among other suitable file formats for communicating with the manufacturing system. The NFT represents a digital asset that includes the design model and metadata associated with the design model. The design model may be hosted off-chain on a server or computing device and accessible through the NFT via a URL. Further, metadata of the NFT can include attributes or properties that are hosted off-chain on a server or computing device and accessible through the NFT via a URL. The attributes or properties may be editable or mutable by authorized users, such as employees or affiliates of the Brand, or certain third-parties, or purchasers of the NFT. The design model is configured to represent the article of footwear with specifications that are unique to the user, or which are capable of being edited and customized to become unique to the user. That is, by accessing the attributes of the metadata, or by accessing the design model itself, the user may customize the article of footwear represented by the design model. To that end, the Brand may provide access to the digital platform 416 that is configured to display the NFT. Further, the second digital asset may comprise a rarity score associated with the second virtual object. For example, at least one attribute of the second virtual object may correspond to a rarity score that is a statistical comparison of the at least one attribute to a corresponding sample set, or entire data set, of attributes. In some embodiments, the rarity score is a plurality of percentages. In some embodiments, the virtual object includes a plurality of attributes or traits that are associated with the rarity score. In some embodiments, the rarity score is determined by attributes or conditions separate from the virtual object, such as data associated with the transaction, the user wallet, usage of the first digital asset, or unaffiliated databases or statistics, or some combination thereof.

In some embodiments, any suitable computer readable media can be used for storing instructions for performing the functions and/or processes described herein. For example, in some embodiments, computer readable media can be non-transitory. For example, non-transitory computer readable media can include media such as magnetic media (such as hard disks, floppy disks, *etc.*), optical media (such as compact discs, digital video discs, Blu-ray discs, *etc.*), semiconductor media (such as RAM, Flash memory, electrically programmable read only memory (EPROM), electrically erasable programmable read only memory (EEPROM), *etc.*), any suitable media that is not fleeting or devoid of any semblance of permanence during transmission, and/or any suitable tangible media.

The above-described aspects of the processes of FIGS. 6A, 6B, and 7 can be executed or performed in any order or sequence not limited to the order and sequence shown and described in the figures. Also, some of the above aspects of the processes of FIGS. 6A, 6B, and 7 can be executed or performed substantially simultaneously where appropriate or in parallel to reduce latency and processing times.

Although the invention has been described and illustrated in the foregoing illustrative embodiments, it is understood that the present disclosure has been made only by way of example, and that numerous changes in the details of implementation of the invention can be made without departing from the spirit and scope of the invention, which is limited only by the claims that follow. Features of the disclosed embodiments can be combined and rearranged in various ways.

## Claims

1. A method of using a non-fungible token, the method comprising:
generating a first digital asset including a first virtual object;
minting a first non-fungible token securing ownership of the first digital asset to a blockchain;
providing the first digital asset on a digital platform;
transferring the first non-fungible token to a user wallet;
generating a second digital asset including a second virtual object;
minting a second non-fungible token securing ownership of the second digital asset to the blockchain;
generating a third digital asset including a third virtual object;
minting a third non-fungible token securing ownership of the third digital asset to a blockchain;
initiating a first redemption sequence upon occurrence of a first redemption event, wherein the first redemption sequence comprises:
burning the first digital asset; and
transferring the second non-fungible token and the third non-fungible token to the user wallet; and
initiating a second redemption sequence upon occurrence of a second redemption event, wherein the second redemption sequence comprises at least one of burning the third digital asset and producing a physical item corresponding to the second virtual object of the second digital asset.

2. The method of claim 1 further comprising updating the second virtual object of the second digital asset based on a fourth digital asset secured with a fourth non-fungible token.

3. The method of claims 1 or 2, wherein each of the first redemption event and the second redemption event includes at least one of a transaction or a predetermined window of time.

4. The method of claims 1 or 2, wherein the second redemption sequence must occur after the first redemption event.

5. The method of claims 1 or 2, wherein the second redemption event and the first redemption event occur at different times.

6. The method of claims 1 or 2, wherein the second redemption event is expiration of a predetermined window of time that, upon occurrence, is configured to initiate only burning the third digital asset.

7. The method of claims 1 or 2, wherein the second redemption event is a transaction that, upon occurrence before a claim date, is configured to initiate burning the third digital asset and producing the physical item corresponding to the second virtual object of the second digital asset.

8. The method of claims 1 or 2, wherein a first metadata element of the first digital asset is a uniform resource locator and a second metadata element of a second digital asset is a product identifier.

9. The method of claims 1 or 2, wherein the first virtual object is a digital artwork, and wherein the first digital asset comprises a plurality of digital assets having the digital artwork.

10. The method of claims 1 or 2, wherein the second virtual object is a digital representation of an article of footwear, and wherein the second digital asset comprises a plurality of digital assets having the digital representation of the article of footwear.

11. The method of claims 1 or 2, wherein the second digital asset comprises a plurality of digital assets each having a digital representation of an article of footwear that is different from one another.

12. The method of claims 1 or 2, wherein a first metadata element, a second metadata element, and a third metadata element each include a URL to a site hosted remotely, off of the blockchain.

13. The method of claim 2, wherein a first metadata element of the first digital asset is updated automatically by the digital platform to burn the first digital asset.

14. The method of claim 2, wherein the second virtual object of the second digital asset is updated only after approval is provided by a user.

15. The method according to any of the preceding claims further comprising displaying the second virtual object as a profile picture associated with a user account on the digital platform.
